# EUROPEAN PATENT SPECIFICATION

(11) **EP 3 343 395 B1**
(45) Date of publication and mention of the grant of the patent: **22.07.2020**
(21) Application number: 16838499.8
(22) Date of filing: 16.08.2016
(51) Int. Cl.: G06F 16/907

(54) **DATA STORAGE METHOD AND APPARATUS FOR MOBILE TERMINAL**
DATENSPEICHERVERFAHREN UND -VORRICHTUNG FÜR EIN MOBILES ENDGERÄT
PROCÉDÉ ET APPAREIL DE STOCKAGE DE DONNÉES POUR TERMINAL MOBILE

(30) Priority: 24.08.2015 CN 201510524667
(43) Date of publication of application: 04.07.2018
(73) Proprietor: Alibaba Group Holding Limited, Grand Cayman (KY)
(72) Inventor: LIAN, Jie, Hangzhou 310099 (CN)
(74) Representative: Conroy, John
(86) International application number: PCT/CN2016/095520
(87) International publication number: WO 2017/032240

(56) References cited:
- CN-A- 102 999 522
- CN-A- 103 034 650
- CN-A- 104 462 127
- CN-A- 104 504 158
- US-A1- 2003 208 559
- US-A1- 2014 040 286

## Description

### Technical Field

The present application relates to the field of storage technologies, and in particular, to a data storage method and apparatus for a mobile terminal.

### Background Art

With the development of science and technology, an increasing number of mobile terminals have stepped into people's life, such as smart phones and tablet computers. A user can install a variety of applications in a mobile terminal, and accordingly, increasingly more data need to be stored locally in the mobile terminal. The data have different formats and frequently-changing structures, which seriously affects the read and write performance of the mobile terminal and also reduces the efficiency of development, operation, and maintenance of the applications at the same time.

US Patent Publication US 2014/040286 A1 to Bane for "Method and system for the Normalization, filtering and Securing of associated metadata Information on file objects deposited into an object store," published 06 February 2014, discloses a processing system and method that takes metadata extracted from files being transferred from a file system to an object store and prioritizes, filters, and normalizes the metadata into a collection of metatags that are then associated with the file (object) when it is saved to the object store repository. The processing system can receive raw output from a metadata parser on a file, object, or digital asset; identify relevant metadata keys and values, in addition to potential user configured metadata keys and values; prioritize the list of relevant metadata keys; associate the prioritized list of relevant metadata key values to normalized metatag keys; and filter the candidate list of normalized metatag keys and remaining unassociated metadata keys.

### Summary of the Invention

In light of the above, the present application provides a data storage method and apparatus.

Specifically, the present application is implemented by using the following technical solutions:
A data storage method for a mobile terminal, wherein the method includes:
performing format conversion on original data to obtain first data in a preset format;
creating first metadata of the first data;
judging, according to a corresponding relationship saved in a cache between key values and metadata, whether the first data is stored in a database;
saving, if the first data is not stored in the database, the first data, the first metadata of the first data, and a key value of the first data into the cache; and
storing, if a preset triggering condition is satisfied, the first data, the first metadata of the first data, and the key value of the first data in the cache, which have not yet been stored in the database, into the database.

Optionally, the step of judging, according to a corresponding relationship saved in a cache between key values and metadata, whether the first data is stored in a database includes:
judging, according to the key value of the first data, whether second metadata corresponding to the key value is saved in the cache; and
determining that the first data is not stored in the database if the second metadata corresponding to the key value is not saved in the cache.

Optionally, the method further includes:
judging whether the second metadata is the same as the first metadata if the second metadata corresponding to the key value is saved in the cache; and
determining that the first data is not stored in the database if the second metadata is different from the first metadata; and
the step of storing the first data, the first metadata of the first data, and a key value of the first data into the database includes:
   updating the second metadata saved in the cache and corresponding to the key value of the first data to the first metadata, and storing the first data.

Optionally, the step of judging whether the second metadata is the same as the first metadata includes:
judging whether a hash value of the second metadata is the same as a hash value of the first metadata, if yes, determining that the second metadata is the same as the first metadata, or if no, determining that the second metadata is different from the first metadata.

Optionally, the preset triggering condition includes: reaching a preset time period and the mount of cached data reaching a preset threshold.

Optionally, the method further includes:
searching, during data reading, the cache according to the key value to determine whether the corresponding first data is saved therein;
acquiring, when the first data corresponding to the key value is not saved in the cache, the first data corresponding to the key value from the database according to the metadata saved in the cache and corresponding to the key value; and
converting the first data into the original data and then returning a reading result.

A data storage apparatus for a mobile terminal, wherein the apparatus includes:
a first conversion unit configured to perform format conversion on original data to obtain first data in a preset format;
a metadata creation unit configured to create first metadata of the first data;
a storage judgment unit configured to judge, according to a corresponding relationship saved in a cache between key values and metadata, whether the first data is stored in a database;
a data cache unit configured to save, if the first data is not stored in the database, the first data, the first metadata of the first data, and a key value of the first data into the cache; and
a data storage unit configured to store, if a preset triggering condition is satisfied, the first data, the first metadata of the first data, and the key value of the first data in the cache, which have not yet been stored in the database, into the database.

Optionally, the storage judgment unit is specifically configured to judge, according to the key value of the first data, whether second metadata corresponding to the key value is saved in the cache, and determine that the first data is not stored in the database if the second metadata corresponding to the key value is not saved in the cache.

Optionally, the storage judgment unit is specifically configured to judge whether the second metadata is the same as the first metadata when the second metadata corresponding to the key value is saved in the cache, and determine that the first data is not stored in the database if the second metadata is different from the first metadata; and
the data cache unit is specifically configured to update the second metadata saved in the cache and corresponding to the key value of the first data to the first metadata, and store the first data.

Optionally, the storage judgment unit is specifically configured to judge whether a hash value of the second metadata is the same as a hash value of the first metadata, if yes, determine that the second metadata is the same as the first metadata, or if no, determine that the second metadata is different from the first metadata.

Optionally, the preset triggering condition includes: reaching a preset time period and the mount of cached data reaching a preset threshold.

Optionally, the apparatus further includes:
a first reading unit configured to search, during data reading, the cache according to the key value to determine whether the corresponding first data is saved therein;
a second reading unit configured to acquire, when the first data corresponding to the key value is not saved in the cache, the first data corresponding to the key value from the database according to the metadata saved in the cache and corresponding to the key value; and
a second conversion unit configured to convert the first data into the original data and then return a reading result.

It can be seen from the above description that the present application can convert original data into data in a preset format and then store the data into a Key-Value-based non-relational database, and can eliminate the structural difference of the data, and improve the compatibility of the data and the efficiency of data reading and writing.

### Brief Description of the Drawings

FIG. 1 is a schematic flowchart of a data storage method for a mobile terminal according to an exemplary embodiment of the present application;
FIG. 2 is a schematic flowchart of a step of determining whether first data is stored in a database according to an exemplary embodiment of the present application;
FIG. 3 is a schematic structural diagram of a mobile terminal according to an exemplary embodiment of the present application; and
FIG. 4 is a schematic structural diagram of a data storage apparatus for a mobile terminal according to an exemplary embodiment of the present application.

### Detailed Description

Exemplary embodiments will be described herein in detail, and examples thereof are shown in the accompanying drawings. In the following description involving the accompanying drawings, the same numerals in different accompanying drawings denote the same or similar elements, unless specified otherwise. Implementation manners described in the following exemplary embodiments do not represent all implementation manners consistent with the present application. Instead, they are merely examples of apparatuses and methods consistent with some aspects of the present application as described in detail in the appended claims.

Terms used in the present application are merely used for describing specific embodiments, instead of limiting the present application. Singular forms "a(n)", "said", and "the" used in the present application and the appended claims also include plural forms, unless clearly specified in the context that other meanings are denoted. It should be further understood that the term "and/or" used herein refers to and includes any or all possible combinations of one or more associated items listed.

It should be understood that although terms such as "first", "second", and "third" may be used in the present application to describe various kinds of information, these kinds of information should not be limited to the terms. These terms are merely used to distinguish information of the same type from each other. For example, without departing from the scope of the present application, the first information may also be referred to as second information, and similarly, the second information may also be referred to as first information. Depending on the context, the word "if" used herein may be explained as "when...", "as...", or "in response to the determination".

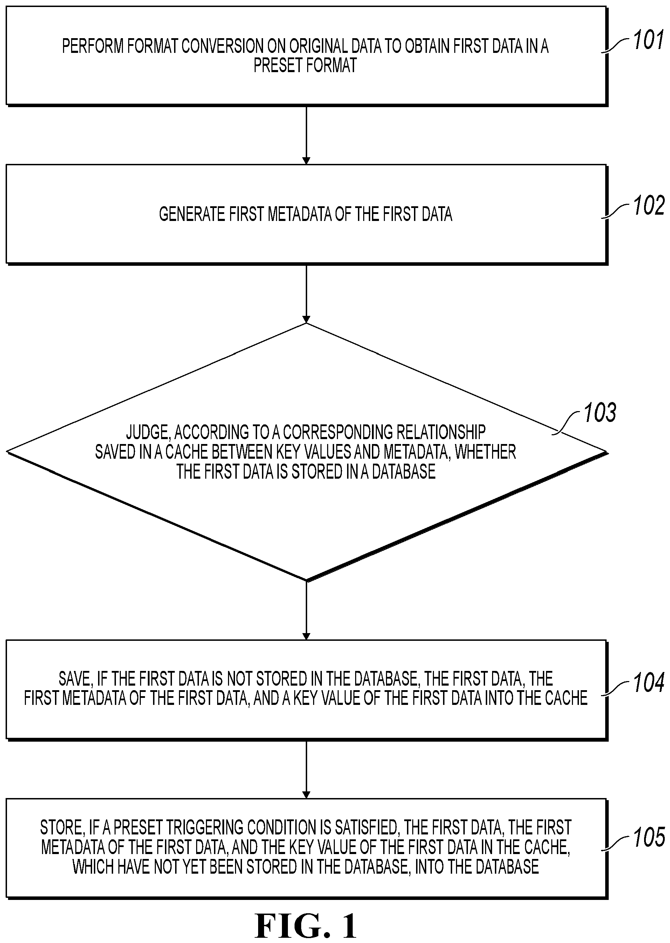

FIG. 1 is a schematic flowchart of a data storage method for a mobile terminal according to an exemplary embodiment of the present application.

Referring to FIG. 1, the data storage method may be applied to a mobile terminal. The terminal may include a smart phone, a tablet computer, a Personal Digital Assistant (PDA), and other smart devices. The data storage method may include the following steps:
Step 101. Format conversion is performed on original data to obtain first data in a preset format.

In this embodiment, the original data is data to be stored in a local database of a mobile terminal. The original data includes news, lists, information and other data required by various applications and cached locally. The original data may be in a text format, an XML format, or the like.

In this step, upon receipt of the original data to be stored, the mobile terminal performs format conversion on the original data to convert the data into data in a preset format. The preset format may be set by the administrator, such as a binary format or a decimal format. In the present application, for ease of description, the data obtained after format conversion is performed on the original data is referred to as first data.

Step 102. First metadata of the first data is created.

Based on the foregoing step 101, after converting the original data into the first data, the mobile terminal creates metadata of the first data. In the present application, the created metadata of the first data is referred to as first metadata.

Step 103. It is judged, according to a corresponding relationship saved in a cache between key values and metadata, whether the first data is stored in a database, and if the first data is not stored in the database, step 104 is performed.

In this embodiment, in order to improve the read-write efficiency, a non-relational database that stores data based on a Key Value can be used as an underlying storage medium of the mobile terminal. The non-relational database includes first data obtained after format conversion performed on each piece of original data, first metadata, and Key values. A corresponding relationship between each piece of first metadata and a key value thereof in the non-relational database is saved in a cache of the mobile terminal. In this embodiment, for ease of differentiation, the first metadata saved in the cache is referred to as second metadata. Specifically, the mobile terminal may save, after restart, a corresponding relationship between each piece of first metadata and a key value thereof in the non-relational database (hereinafter referred to as a database for short) in a cache, for example, memory. Alternatively, after receiving the original data to be stored in the database, the mobile terminal may save first metadata corresponding to the original data and a key value thereof in the cache if determining that the original data after format conversion is not stored in the database, that is, the first data of the original data is not stored in the database, and reference can be made to the subsequent description for a specific implementation procedure thereof.

In this step, the mobile terminal may judge, according to a key value of the first data and a corresponding relationship saved in a cache between key values and metadata, whether the first data has already been stored in the database. The key value of the first data is also the key value of the original data.

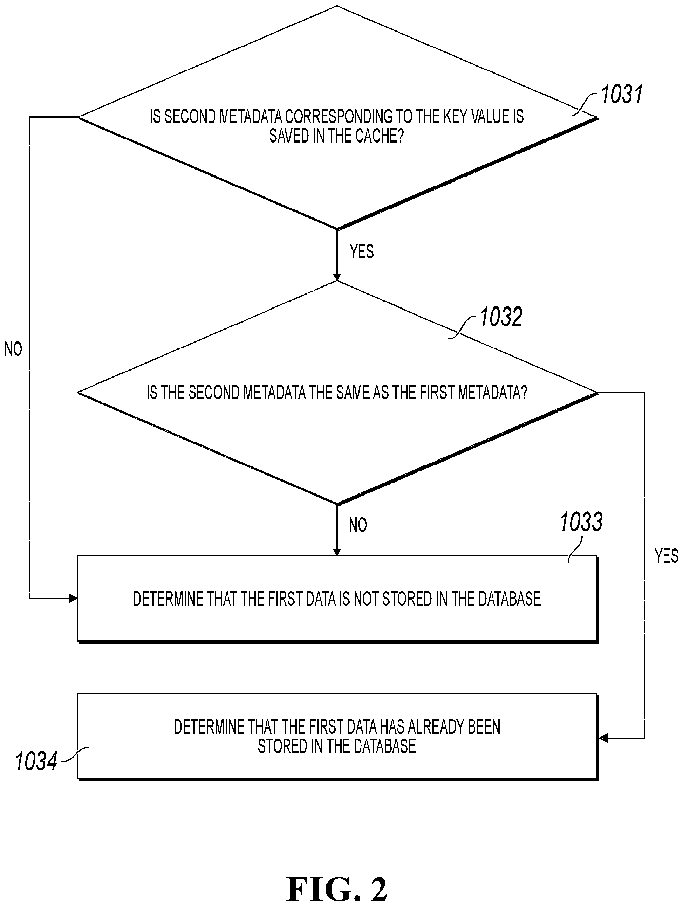

Referring to FIG. 2, in an optional implementation manner of the present application, the step of determining whether the first data is stored in a database may include the following steps:
Step 1031. It is judged, according to the key value of the first data, whether second metadata corresponding to the key value is saved in the cache. If the second metadata corresponding to the key value is saved in the cache, step 1032 is performed, or if the second metadata corresponding to the key value is not saved in the cache, step 1033 is performed.
Step 1032. It is judged whether the second metadata is the same as the first metadata. If the second metadata is different from the first metadata, step 1033 is performed, or if the second metadata is the same as the first metadata, step 1034 is performed.

Based on the judgment result of the foregoing step 1031, if the second metadata corresponding to the key value is saved in the cache, it indicates that first data corresponding to the key value is stored in the underlying database. However, it is unknown whether the first data is first data of the latest version. Therefore, it may be judged whether the second metadata is the same as the created first metadata in this step.

In this embodiment, whether the second metadata is the same as the first metadata may be judged by comparing each byte of the second metadata with that of the first metadata. Optionally, whether the second metadata is the same as the first metadata may also be judged by judging whether a hash value of the second metadata is the same as a hash value of the first metadata. Specifically, the second metadata includes a hash value stored in the database, where the hash value corresponds to the first data. In this step, it is feasible to calculate a hash value of the first data according to the first data obtained after conversion in step 101, so as to use the hash value as the hash value of the first metadata. It is then compared whether the hash value obtained by calculation is the same as the hash value included in the second metadata. If they are different, it is determined that the second metadata is different from the first metadata, and step 1033 is performed. If they are the same, it is determined that the second metadata is the same as the first metadata, and step 1034 is performed.

Step 1033. It is determined that the first data is not stored in the database.

In this embodiment, based on the judgment result of the foregoing step 1031, if the second metadata corresponding to the key value is not saved in the cache, it can be determined that the first data is not stored in the database.

Based on the judgment result of the foregoing step 1032, if the second metadata is different from the first metadata, it indicates that first data having a same key value is stored in the database, but the first data is different from the first data obtained by conversion in the foregoing step 101. As a result, the two pieces of first data have different metadata. This may be because the first data stored in the database is not the latest data and needs to be updated. Therefore, in this case, it may also be determined that the first data obtained by conversion in the foregoing step 101 is not stored in the database.

Step 1034. It is determined that the first data has already been stored in the database.

Based on the judgment result of the foregoing step 1032, if the second metadata is the same as the first metadata, it indicates that first data having a same key value is stored in the database, and the first data is the same as the first data obtained by conversion in the foregoing step 101. In this case, update is not required. The mobile terminal may delete the original data received in the foregoing step 101, the first data obtained after conversion, and the first metadata created in the foregoing step 102.

In this embodiment, whether the received original data has already been stored in the database may be determined according to a corresponding relationship saved in the cache between key values and metadata, which greatly reduces system consumption brought about by access to the database.

Step 104. The first data, the first metadata of the first data, and the key value of the first data are saved into the cache.

Based on the judgment result of the foregoing step 103, if the first data is not stored in the database, the first data needs to be stored in the database. In this embodiment, the first data, the first metadata of the first data, and the key value of the first data are saved into the cache at first.

With respect to two situations where the first data is not stored in the database in the foregoing step 103, the following two implementation manners may be employed in this step:
In a first manner, the second metadata corresponding to the key value of the first data is not saved in the cache. In this case, it indicates that first data of the original data received in step 101 is not stored in the database, and then the mobile terminal may first save the first data, the first metadata of the first data, and the key value of the first data into the cache and mark them as not stored. The mobile terminal may set a flag bit for marking a storage state for such a whole piece of data as the first data, the first metadata of the first data, and the key value of the first data. For example, if the flag bit is 0, it indicates that the data is not stored. If the flag bit is 1, it indicates that the data has already been stored. The mobile terminal may also set a list of key values, and the key value of the first data not stored in the database is stored in the list of key values. Definitely, those skilled in the art may also mark, in another manner, whether the data saved in the cache has already been stored in the database, which is not specially limited in the present application.
In a second manner, the second metadata corresponding to the key value of the first data is saved in the cache, but the second metadata is different from the first metadata of the first data. In this case, it indicates that first data having a same key value is stored in the database, but the first data is not the latest first data and needs to be updated. The mobile terminal may update the second metadata corresponding to the key value of the first data which is saved in the cache to the first metadata, and save the first data, such that one piece of latest metadata is saved in the cache for one key value. In addition, in this manner, this piece of updated data may also be marked as not stored as the first manner.

Step 105. If a preset triggering condition is satisfied, the first data, the first metadata of the first data, and the key value of the first data in the cache, which have not yet been stored in the database, are stored into the database.

In this embodiment, if a preset triggering condition is satisfied, the mobile terminal may store the first data, the first metadata of the first data, and the key value of the first data in the cache, which have not yet been stored in the database, into the database, that is, store the data, which is marked as not stored, in the cache into the database.

In this embodiment, the triggering condition may be set by the administrator. For example, the triggering condition may be reaching a preset time period, and the triggering condition may also be that the amount of cached data reaches a preset threshold, which is not specially limited in the present application.

It can be seen from the above description that the present application can convert original data into data in a preset format and then store the data into a Key-Value-based non-relational database, and can eliminate the structural difference of the data, and improve the compatibility of the data and the efficiency of data reading and writing.

In another embodiment of the present application, the mobile terminal may also store first data having a relatively high read frequency into the cache to improve the read efficiency. Therefore, when receiving a data read instruction, the mobile terminal may first search the cache according to a key value carried in a read command to determine whether corresponding first data is saved therein. When the corresponding first data is saved in the cache, reverse format conversion may be performed on the first data in the cache, and then a reading result is returned after the first data is converted into original data. When the first data corresponding to the key value is not saved in the cache, the mobile terminal may first search for metadata (second metadata) saved in the cache and corresponding to the key value, then acquire first data corresponding to the key value from the database according to the metadata, then perform reverse format conversion on the acquired first data, and return a reading result after the first data is converted into original data.

In another embodiment of the present application, when a preset condition is satisfied, the mobile terminal deletes the first data saved in the cache. For example, the mobile terminal may regularly delete the first data saved in the cache, and may also delete the first data saved in the cache when a read frequency of the first data is less than a threshold, which is not specially limited in the present application.

In addition, according to the related art, the data storage solution provided in the present application may further support encrypted storage. For example, after converting original data into first data in a preset format, the mobile terminal may encrypt the first data and then store the first data. Correspondingly, after reading the first data, the mobile terminal decrypts the first data, converts the first data into the original data and then returns a reading result.

Corresponding to the foregoing embodiment of the data storage method for a mobile terminal, the present application further provides an embodiment of a data storage apparatus for a mobile terminal.

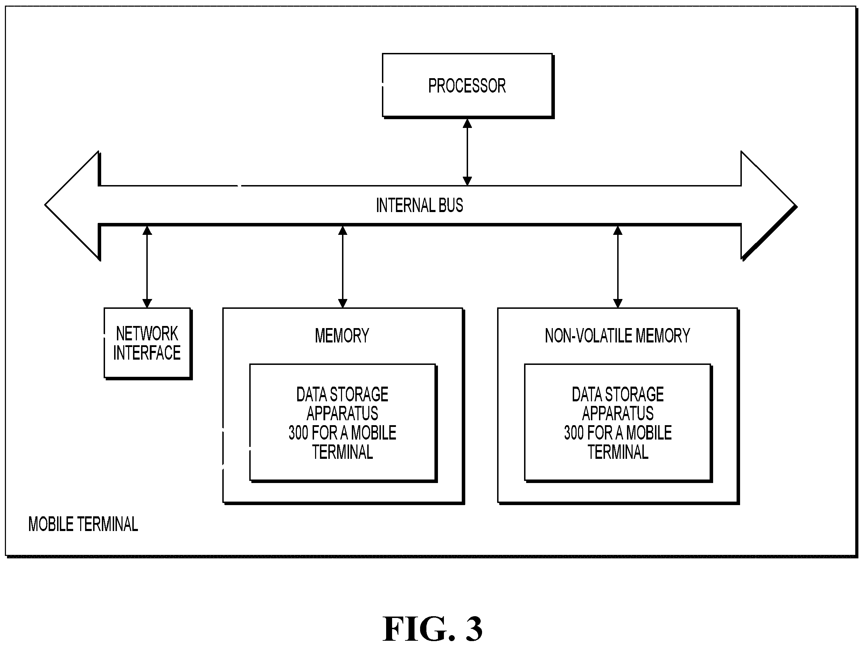

The embodiment of the data storage apparatus for a mobile terminal in the present application may be applied to a mobile terminal. The apparatus embodiment may be implemented by software, and may also be implemented by hardware or by a combination of software and hardware. For example, the apparatus embodiment is implemented by software, and in this case, as a logical apparatus, the apparatus is formed by reading, by a processor of a mobile terminal where the apparatus is located, a corresponding computer program instruction in a non-volatile memory into memory for running. From the perspective of hardware, as shown in FIG. 3, which is a hardware structural diagram of a mobile terminal where the data storage apparatus is located according to the present application, in addition to a processor, memory, a network interface, and a non-volatile memory shown in FIG. 3, the mobile terminal where the apparatus is located in the embodiment generally may further include other hardware according to actual functions of the mobile terminal, which is not further described.

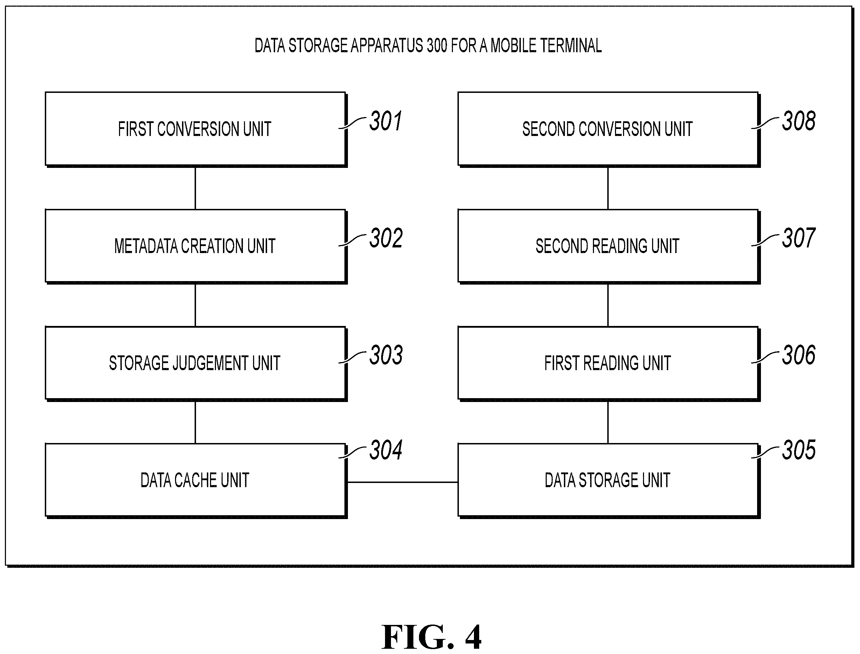

FIG. 4 is a schematic structural diagram of a data storage apparatus for a mobile terminal according to an exemplary embodiment of the present application.

Referring to FIG. 4, the data storage apparatus 300 for a mobile terminal may include: a first conversion unit 301, a metadata creation unit 302, a storage judgment unit 303, a data cache unit 304, a data storage unit 305, a first reading unit 306, a second reading unit 307, and a second conversion unit 308.

The first conversion unit 301 is configured to perform format conversion on original data to obtain first data in a preset format.

The metadata creation unit 302 is configured to create first metadata of the first data.

The storage judgment unit 303 is configured to judge, according to a corresponding relationship saved in a cache between key values and metadata, whether the first data is stored in a database.

The data cache unit 304 is configured to save, if the first data is not stored in the database, the first data, the first metadata of the first data, and a key value of the first data into the cache.

The data storage unit 305 is configured to store, if a preset triggering condition is satisfied, the first data, the first metadata of the first data, and the key value of the first data in the cache, which have not yet been stored in the database, into the database.

Optionally, the storage judgment unit 303 is specifically configured to judge, according to the key value of the first data, whether second metadata corresponding to the key value is saved in the cache, and determines that the first data is not stored in the database if the second metadata corresponding to the key value is not saved in the cache.

Optionally, the storage judgment unit 303 is specifically configured to judge, whether the second metadata is the same as the first metadata when the second metadata corresponding to the key value is saved in the cache, and determines that the first data is not stored in the database if the second metadata is different from the first metadata.

The data cache unit 304 is specifically configured to update the second metadata saved in the cache and corresponding to the key value of the first data to the first metadata, and stores the first data.

Optionally, the storage judgment unit 303 is specifically configured to judge whether a hash value of the second metadata is the same as a hash value of the first metadata, if yes, determines that the second metadata is the same as the first metadata, or if no, determines that the second metadata is different from the first metadata.

Optionally, the preset triggering condition includes: reaching a preset time period and the mount of cached data reaching a preset threshold.

The first reading unit 306 is configured to search, during data reading, the cache according to the key value to determine whether the corresponding first data is saved therein.

The second reading unit 307 is configured to acquire, when the first data corresponding to the key value is not saved in the cache, the first data corresponding to the key value from the database according to the metadata saved in the cache and corresponding to the key value.

The second conversion unit 308 is configured to convert the first data into the original data and then returns a reading result.

For the implementation processes of functions and effects of various units in the apparatus, reference can be made to the implementation processes of the corresponding steps in the method, and details thereof are not repeated herein.

The apparatus embodiment basically corresponds to the method embodiment, and therefore reference may be made to the description of the parts in the method embodiment for related contents. The apparatus embodiment described above is merely exemplary, the units described as separate parts may or may not be physically separate, and parts displayed as units may or may not be physical units, may be located in one position, or may be distributed on a plurality of network units. Some or all of the modules therein may be selected according to actual needs to achieve the objectives of the solutions of the present application. Those of ordinary skill in the art can understand and implement the present application without making creative efforts.

The above description is merely preferred embodiments of the present application, and are not intended to limit the present application.

## Claims

1. A data storage method performed by a mobile terminal that
uses, as an underlying storage medium, a key-value, non-relational database that stores data based on a key value, and
saves, in a cache, correspondence relationships between a plurality of pieces of metadata and corresponding key values of the data stored in the non-relational database for the key value;
wherein the method comprises:
converting first original data to first data having a preset format (101), wherein original data is data required by one of various applications and is to be cached locally, wherein the preset format eliminates structural differences of original data required by different of the various applications, wherein the first data has a first key value;
creating first metadata of the first data (102);
determining, according to the correspondence relationships, whether the first data is stored in the non-relational database (103) including determining that the first data is stored in the non-relational database if the correspondence relationships include a relationship between (i) the first key value and (ii) second metadata that is the same as the first metadata, and otherwise determining that the first data is not stored in the non-relational database;
saving into the cache if the first data is not stored in the non-relational database, the first data, the first metadata of the first data, and the first key value of the first data (104) and otherwise performing no update of the cache and deleting the original data, the first data, and the first metadata; and
storing, into the non-relational database if a preset triggering condition is satisfied, the first data, the first metadata of the first data, and the key value of the first data in the cache, which have not yet been stored in the non-relational database (105).

2. The method of claim 1, further comprising:
after restart of the mobile terminal, saving in the cache the correspondence relationship between each piece of first metadata and the corresponding key value in the non-relational database.

3. The method of claim 2, wherein the step of storing the first data, the first metadata of the first data, and a key value of the first data into the non-relational database comprises updating the second metadata saved in the cache and corresponding to the key value of the first data to the first metadata, and storing the first data.

4. The method of claim 3, wherein determining whether the second metadata is the same as the first metadata comprises: determining whether a hash value of the second metadata is the same as a hash value of the first metadata, if yes, determining that the second metadata is the same as the first metadata, or if no, determining that the second metadata is different from the first metadata.

5. The method of any one of claims 1 to 4, wherein the preset triggering condition comprises reaching a preset time period or the amount of cached data reaching a preset threshold.

6. The method of any one of claims 1 to 5, wherein the method further comprises:
searching, during data reading, the cache according to the key value to determine whether the corresponding first data is saved therein;
obtaining, when the first data corresponding to the key value is not saved in the cache, the first data corresponding to the key value from the non-relational database according to the metadata saved in the cache and corresponding to the key value; and
converting the first data into the first original data and returning a data reading result.

7. The method of claim 6, further comprising converting the first data to the original format when the first data corresponding to the key value is saved in the cache and returning a data reading result.

8. The method of any one of claims 1 to 7, wherein the first data is encrypted before storing to the cache or the non-relational database.

9. A data storage apparatus for a mobile terminal, wherein the apparatus comprises:
a first conversion unit (301) configured to convert original data into first data having a preset format, wherein original data is data required by one of various applications and is to be cached locally, wherein the preset format eliminates structural differences of original data required by different of the various applications;
a metadata creation unit (302) configured to create first metadata of the first data;
a key-value non-relational database used as an underlying storage medium and configured to store data based on a key value;
a data cache unit (304) configured to save correspondence relationships between a plurality of pieces of metadata and corresponding key values of the data stored in the non-relational database; and
a storage determination unit (303) configured to determine, according to the correspondence relationships saved in the data cache unit, whether the first data is stored in the non-relational database, including determining that the first data is stored in the non-relational database if the correspondence relationships include a relationship between (i) the first key value and (ii) second metadata that is the same as the first metadata, and otherwise determining that the first data is not stored in the non-relational database,
wherein the mobile terminal is configured to save, in the data cache unit (304), the first data, the first metadata of the first data, and a key value of the first data if the first data is not stored in the non-relational database and otherwise perform no update of the cache and delete the original data, the first data, and the first metadata, and
the mobile terminal is configured to store, in the data storage unit (305), the first data, the first metadata of the first data, and the key value of the first data in the data cache unit (304), which have not yet been stored in the non-relational database, if a preset triggering condition is satisfied.

10. The apparatus of claim 9, wherein:
the data cache unit is specifically configured to update the second metadata saved in the data cache unit (304) and corresponding to the key value of the first data to the first metadata, and store the first data.

11. The apparatus of claim 10, wherein the storage determination unit is specifically configured to determine whether a hash value of the second metadata is the same as a hash value of the first metadata, if yes, determine that the second metadata is the same as the first metadata, or if no, determine that the second metadata is different from the first metadata.

12. The apparatus of any one of claims 9 to 11, wherein the preset triggering condition comprises reaching a preset time period or the amount of cached data reaching a preset threshold.

13. The apparatus of any one of claims 9 to 12, wherein the apparatus further comprises:
a first reading unit (306) configured to search, during data reading, the data cache unit (304) according to the key value to determine whether the corresponding first data is saved therein;
a second reading unit (307) configured to obtain, when the first data corresponding to the key value is not saved in the data cache unit (304), the first data corresponding to the key value from the non-relational database according to the metadata saved in the data cache unit (304) and corresponding to the key value; and
a second conversion unit (308) configured to convert the first data into the original data and return a reading result.

## Patentansprüche

1. Datenspeicherverfahren, das von einem mobilen Endgerät durchgeführt wird, das als zugrundeliegendes Speichermedium eine nichtrelationale Schlüsselwert-Datenbank verwendet, die auf einem Schlüsselwert basierende Daten speichert und in einem Cache Entsprechungsbeziehungen zwischen mehreren Einheiten von Metadaten und entsprechenden Schlüsselwerten der in der nichtrelationalen Datenbank für den Schlüsselwert gespeicherten Daten speichert;
wobei das Verfahren Folgendes umfasst:
Konvertieren erster Originaldaten in erste Daten mit einem voreingestellten Format (101), wobei die Originaldaten Daten sind, die von einer von verschiedenen Anwendungen benötigt werden und lokal zwischengespeichert werden sollen, wobei das voreingestellte Format strukturelle Unterschiede der Originaldaten eliminiert, die von verschiedenen der verschiedenen Anwendungen benötigt werden, wobei die ersten Daten einen ersten Schlüsselwert aufweisen;
Erstellen erster Metadaten der ersten Daten (102);
Bestimmen, entsprechend den Entsprechungsbeziehungen, ob die ersten Daten in der nichtrelationalen Datenbank (103) gespeichert sind, einschließlich des Bestimmens, dass die ersten Daten in der nichtrelationalen Datenbank gespeichert sind, wenn die Entsprechungsbeziehungen eine Beziehung zwischen (i) dem ersten Schlüsselwert und (ii) zweiten Metadaten umfassen, die mit den ersten Metadaten identisch sind, und andernfalls Bestimmen, dass die ersten Daten nicht in der nichtrelationalen Datenbank gespeichert sind;
Speichern in den Cache, wenn die ersten Daten nicht in der nichtrelationalen Datenbank gespeichert sind, der ersten Daten, der ersten Metadaten der ersten Daten und des ersten Schlüsselwerts der ersten Daten (104) und andernfalls kein Durchführen der Aktualisierung des Cache und Löschen der Originaldaten, der ersten Daten und der ersten Metadaten; und
Speichern der ersten Daten, der ersten Metadaten der ersten Daten und des Schlüsselwerts der ersten Daten im Cache, die noch nicht in der nichtrelationalen Datenbank (105) gespeichert sind, in der nichtrelationalen Datenbank, wenn eine voreingestellte Auslösebedingung erfüllt ist.

2. Verfahren nach Anspruch 1, ferner Folgendes umfassend:
nach dem Neustart des mobilen Endgeräts, Speichern, im Cache, der Entsprechungsbeziehung zwischen jeder Einheit der ersten Metadaten und dem entsprechenden Schlüsselwert in der nichtrelationalen Datenbank.

3. Verfahren nach Anspruch 2, wobei der Schritt des Speicherns der ersten Daten, der ersten Metadaten der ersten Daten und eines Schlüsselwertes der ersten Daten in der nichtrelationalen Datenbank das Aktualisieren der zweiten Metadaten, die im Cache gespeichert sind und dem Schlüsselwert der ersten Daten entsprechen, auf die ersten Metadaten und das Speichern der ersten Daten umfasst.

4. Verfahren nach Anspruch 3, wobei das Bestimmen, ob die zweiten Metadaten mit den ersten Metadaten identisch sind, Folgendes umfasst:
Bestimmen, ob ein Hash-Wert der zweiten Metadaten mit einem Hash-Wert der ersten Metadaten identisch ist, wenn ja, Bestimmen, dass die zweiten Metadaten mit den ersten Metadaten identisch sind, oder, wenn nein, Bestimmen, dass sich die zweiten Metadaten von den ersten Metadaten unterscheiden.

5. Verfahren nach einem der Ansprüche 1 bis 4, wobei die voreingestellte Auslösebedingung das Erreichen einer voreingestellten Zeitspanne oder das Erreichen eines voreingestellten Schwellenwerts durch die Menge der zwischengespeicherten Daten umfasst.

6. Verfahren nach einem der Ansprüche 1 bis 5, wobei das Verfahren ferner Folgendes umfasst:
Durchsuchen des Caches, während des Datenlesens, nach dem Schlüsselwert, um festzustellen, ob die entsprechenden ersten Daten darin gespeichert sind;
Abrufen, wenn die ersten Daten, die dem Schlüsselwert entsprechen, nicht im Cache gespeichert sind, der ersten Daten, die dem Schlüsselwert entsprechen, aus der nichtrelationalen Datenbank gemäß den Metadaten, die im Cache gespeichert sind und dem Schlüsselwert entsprechen; und
Konvertieren der ersten Daten in die ersten Originaldaten und Zurückgeben eines Datenleseergebnisses.

7. Verfahren nach Anspruch 6, ferner umfassend das Konvertieren der ersten Daten in das Originalformat, wenn die ersten Daten, die dem Schlüsselwert entsprechen, im Cache gespeichert werden, und das Zurückgeben eines Datenleseergebnisses.

8. Verfahren nach einem der Ansprüche 1 bis 7, wobei die ersten Daten vor der Speicherung im Cache oder in der nichtrelationalen Datenbank verschlüsselt werden.

9. Datenspeichereinrichtung für ein mobiles Endgerät, wobei die Einrichtung Folgendes umfasst:
eine erste Konvertierungseinheit (301), die so konfiguriert ist, dass sie Originaldaten in erste Daten mit einem voreingestellten Format konvertiert, wobei Originaldaten Daten sind, die von einer von verschiedenen Anwendungen benötigt werden und lokal zwischengespeichert werden sollen, wobei das voreingestellte Format strukturelle Unterschiede der Originaldaten eliminiert, die von verschiedenen der verschiedenen Anwendungen benötigt werden;
eine Metadaten-Erzeugungseinheit (302), die so konfiguriert ist, dass sie die ersten Metadaten der ersten Daten erzeugt;
eine nichtrelationale Schlüsselwert-Datenbank, die als zugrunde liegendes Speichermedium verwendet wird und so konfiguriert ist, dass sie Daten auf der Grundlage eines Schlüsselwerts speichert;
eine Daten-Cache-Einheit (304), die so konfiguriert ist, dass sie Entsprechungsbeziehungen zwischen mehreren Einheiten von Metadaten und entsprechenden Schlüsselwerten der in der nichtrelationalen Datenbank gespeicherten Daten speichert; und
eine Speicherbestimmungseinheit (303), die so konfiguriert ist, dass sie in Übereinstimmung mit den in der Daten-Cache-Einheit gespeicherten Entsprechungsbeziehungen bestimmt, ob die ersten Daten in der nichtrelationalen Datenbank gespeichert sind, einschließlich des Bestimmens, dass die ersten Daten in der nichtrelationalen Datenbank gespeichert sind, wenn die Entsprechungsbeziehungen eine Beziehung zwischen (i) dem ersten Schlüsselwert und (ii) den zweiten Metadaten, die mit den ersten Metadaten identisch sind, enthalten, und andernfalls des Bestimmens, dass die ersten Daten nicht in der nichtrelationalen Datenbank gespeichert sind, wobei das mobile Endgerät so konfiguriert ist, dass es in der Daten-Cache-Einheit (304) die ersten Daten, die ersten Metadaten der ersten Daten und einen Schlüsselwert der ersten Daten speichert, wenn die ersten Daten nicht in der nichtrelationalen Datenbank gespeichert sind, und ansonsten keine Aktualisierung des Caches durchführt und die Originaldaten, die ersten Daten und die ersten Metadaten löscht, und wobei das mobile Endgerät so konfiguriert ist, dass es in der Datenspeichereinheit (305) die ersten Daten, die ersten Metadaten der ersten Daten und den Schlüsselwert der ersten Daten in der Daten-Cache-Einheit (304) speichert, die noch nicht in der nichtrelationalen Datenbank gespeichert sind, wenn eine voreingestellte Auslösebedingung erfüllt ist.

10. Einrichtung nach Anspruch 9, wobei:
die Daten-Cache-Einheit speziell konfiguriert ist, um die zweiten Metadaten, die in der Daten-Cache-Einheit (304) gespeichert sind und dem Schlüsselwert der ersten Daten entsprechen, auf die ersten Metadaten zu aktualisieren und die ersten Daten zu speichern.

11. Einrichtung nach Anspruch 10, wobei die Speicherbestimmungseinheit speziell für folgende Zwecke konfiguriert ist: Bestimmen, ob ein Hashwert der zweiten Metadaten mit einem Hashwert der ersten Metadaten identisch ist, wenn ja, Bestimmen, dass die zweiten Metadaten mit den ersten Metadaten identisch sind, oder, wenn nein, Bestimmen, dass sich die zweiten Metadaten von den ersten Metadaten unterscheiden.

12. Einrichtung nach einem der Ansprüche 9 bis 11, wobei die voreingestellte Auslösebedingung das Erreichen einer voreingestellten Zeitspanne oder das Erreichen eines voreingestellten Schwellenwerts durch die Menge der zwischengespeicherten Daten umfasst.

13. Einrichtung nach einem der Ansprüche 9 bis 12, wobei die Einrichtung ferner Folgendes umfasst:
eine erste Leseeinheit (306), die konfiguriert ist, um während des Datenlesens die Daten-Cache-Einheit (304) gemäß dem Schlüsselwert zu durchsuchen, um zu bestimmen, ob die entsprechenden ersten Daten darin gespeichert sind;
eine zweite Leseeinheit (307), die so konfiguriert ist, dass sie, wenn die ersten Daten, die dem Schlüsselwert entsprechen, nicht in der Daten-Cache-Einheit (304) gespeichert sind, die ersten Daten, die dem Schlüsselwert entsprechen, aus der nichtrelationalen Datenbank gemäß den Metadaten, die in der Daten-Cache-Einheit (304) gespeichert sind und dem Schlüsselwert entsprechen, abruft; und
eine zweite Konvertierungseinheit (308), die konfiguriert ist, um die ersten Daten in die Originaldaten zu konvertieren und ein Leseergebnis zurückzugeben.

## Revendications

1. Procédé de stockage de données effectué par un terminal mobile qui utilise, comme support de stockage sous-jacent, une clé-valeur, une base de données non relationnelle qui stocke des données sur la base d'une clé-valeur et enregistre, dans un cache, les relations de correspondance entre un pluralité d'éléments de métadonnées et des clés-valeurs correspondantes des données stockées dans la base de données non relationnelle destinées à la clé-valeur ;
le procédé comprenant :
la conversion des premières données d'origine en premières données présentant un format prédéfini (101), les données d'origine étant des données requises par l'une des diverses applications et doivent être mises en cache localement, le format prédéfini éliminant les différences structurales des données d'origine requises par différentes des diverses applications, les premières données présentant une première clé-valeur ;
la création de premières métadonnées des premières données (102) ;
le fait de déterminer, selon les relations de correspondance, si les premières données sont stockées dans la base de données non relationnelle (103), y compris le fait de déterminer que les premières données sont stockées dans la base de données non relationnelle si les relations de correspondance incluent une relation entre (i) la première clé-valeur et (ii) des secondes métadonnées qui sont identiques aux premières métadonnées, et sinon le fait de déterminer que les premières données ne sont pas stockées dans la base de données non relationnelle ;
l'enregistrement dans le cache si les premières données ne sont pas stockées dans la base de données non relationnelle, les premières données, les premières métadonnées des premières données et la première clé-valeur des premières données (104) et sinon le fait de n'effectuer aucune mise à jour du cache et de supprimer les données d'origine, les premières données et les premières métadonnées ; et
le stockage, dans la base de données non relationnelle si une condition de déclenchement prédéfinie est satisfaite, les premières données, les premières métadonnées des premières données et la clé-valeur des premières données dans le cache, qui n'ont pas encore été stockées dans la base de données non relationnelle (105).

2. Procédé selon la revendication 1, comprenant en outre :
après le redémarrage du terminal mobile, l'enregistrement dans le cache de la relation de correspondance entre chaque élément des premières métadonnées et la clé-valeur correspondante dans la base de données non relationnelle.

3. Procédé selon la revendication 2, dans lequel l'étape de stockage des premières données, des premières métadonnées des premières données et d'une clé-valeur des premières données dans la base de données non relationnelle comprend la mise à jour des secondes métadonnées enregistrées dans le cache et correspondant à la clé-valeur des premières données aux premières métadonnées, et le stockage des premières données.

4. Procédé selon la revendication 3, dans lequel le fait de déterminer si les secondes métadonnées sont identiques aux premières métadonnées comprend :
le fait de déterminer si une valeur de hachage des secondes métadonnées est identique à une valeur de hachage des premières métadonnées, si oui, le fait de déterminer que les secondes métadonnées sont identiques aux premières métadonnées, ou si non, le fait de déterminer que les secondes métadonnées sont différentes des premières métadonnées.

5. Procédé selon l'une quelconque des revendications 1 à 4, dans lequel la condition de déclenchement prédéfinie comprend l'atteinte d'une période de temps prédéfinie ou la quantité de données mises en cache atteignant un seuil prédéfini.

6. Procédé selon l'une quelconque des revendications 1 à 5, dans lequel le procédé comprend en outre :
la recherche, pendant la lecture des données, du cache selon la clé-valeur pour déterminer si les premières données correspondantes y sont enregistrées ;
l'obtention, lorsque les premières données correspondant à la clé-valeur ne sont pas enregistrées dans le cache, des premières données correspondant à la clé-valeur à partir de la base de données non relationnelle selon les métadonnées enregistrées dans le cache et correspondant à la clé-valeur ; et
la conversion des premières données en premières données d'origine et le renvoie d'un résultat de lecture de données.

7. Procédé selon la revendication 6, comprenant en outre la conversion des premières données au format d'origine lorsque les premières données correspondant à la clé-valeur sont enregistrées dans le cache et le revoie d'un résultat de lecture de données.

8. Procédé selon l'une quelconque des revendications 1 à 7, dans lequel les premières données sont chiffrées avant le stockage dans le cache ou la base de données non relationnelle.

9. Appareil de stockage de données destiné à un terminal mobile, dans lequel l'appareil comprend :
une première unité de conversion (301) configurée pour convertir des données d'origine en premières données présentant un format prédéfini, dans lequel les données d'origine sont des données requises par l'une des diverses applications et doivent être mises en cache localement, dans lequel le format prédéfini élimine les différences structurales des données d'origine requises par différentes des diverses applications ;
une unité de création de métadonnées (302) configurée pour créer des premières métadonnées des premières données ;
une base de données non relationnelle à clé-valeur utilisée comme support de stockage sous-jacent et configurée pour stocker des données sur la base d'une clé-valeur ;
une unité de cache de données (304) configurée pour enregistrer des relations de correspondance entre une pluralité d'éléments de métadonnées et des clés-valeurs correspondantes des données stockées dans la base de données non relationnelle ; et
une unité de détermination de stockage (303) configurée pour déterminer, selon les relations de correspondance enregistrées dans l'unité de cache de données, si les premières données sont stockées dans la base de données non relationnelle, y compris le fait de déterminer que les premières données sont stockées dans la base de données non relationnelle si les relations de correspondance incluent une relation entre (i) la première clé-valeur et (ii) les secondes métadonnées qui sont identiques aux premières métadonnées, et sinon le fait de déterminer que les premières données ne sont pas stockées dans la base de données non relationnelle, dans lequel le mobile le terminal est configuré pour enregistrer, dans l'unité de cache de données (304), les premières données, les premières métadonnées des premières données et une clé-valeur des premières données si les premières données ne sont pas stockées dans la base de données non relationnelle et sinon le fait de n'effectuer aucune mise à jour du cache et de supprimer les données d'origine, les premières données et les premières métadonnées, et le terminal mobile est configuré pour stocker, dans l'unité de stockage de données (305), les premières données, les premières métadonnées des premières données et la clé-valeur des premières données dans l'unité de cache de données (304), qui n'ont pas encore été stockées dans la base de données non relationnelle, si une condition de déclenchement prédéfinie est satisfaite.

10. Appareil selon la revendication 9, dans lequel :
l'unité de cache de données est plus particulièrement configurée pour mettre à jour les secondes métadonnées enregistrées dans l'unité de cache de données (304) et correspondant à la clé-valeur des premières données aux premières métadonnées, et pour stocker les premières données.

11. Appareil selon la revendication 10, dans lequel l'unité de détermination de stockage est plus particulièrement configurée pour déterminer si une valeur de hachage des secondes métadonnées est identique à une valeur de hachage des premières métadonnées, si oui, déterminer que les secondes métadonnées sont identiques aux premières métadonnées, ou sinon, déterminer que les secondes métadonnées sont différentes des premières métadonnées.

12. Appareil selon l'une quelconque des revendications 9 à 11, dans lequel la condition de déclenchement prédéfinie comprend l'atteinte d'une période de temps prédéfinie ou la quantité de données mises en cache atteignant un seuil prédéfini.

13. Appareil selon l'une quelconque des revendications 9 à 12, dans lequel l'appareil comprend en outre :
une première unité de lecture (306) configurée pour rechercher, pendant la lecture de données, l'unité de cache de données (304) selon la clé-valeur pour déterminer si les premières données correspondantes y sont enregistrées ;
une seconde unité de lecture (307) configurée pour obtenir, lorsque les premières données correspondant à la clé-valeur ne sont pas enregistrées dans l'unité de cache de données (304), les premières données correspondant à la clé-valeur à partir de la base de données non relationnelle selon les métadonnées enregistrées dans l'unité de cache de données (304) et correspondant à la clé-valeur ; et
une seconde unité de conversion (308) configurée pour convertir les premières données en données d'origine et renvoyer un résultat de lecture.
